# EUROPEAN PATENT SPECIFICATION

(11) **EP 2 617 986 B1**
(45) Date of publication and mention of the grant of the patent: **30.04.2014**
(21) Application number: 12151927.6
(22) Date of filing: 20.01.2012
(51) Int. Cl.: F03D 1/00, B66C 23/18

(54) **Method and arrangement for installing a rotor blade**
Verfahren und Anordnung zur Montage eines Rotorblatts
Procédé et agencement pour l'installation d'une pale de rotor

(43) Date of publication of application: 24.07.2013
(73) Proprietor: Siemens Aktiengesellschaft, 80333 München (DE)
(72) Inventor: Falkenberg, Peter Loevenskjold, 7400 Herning (DK)

(56) References cited:
- DE-A1- 10 141 928
- DE-A1-102009 013 876
- US-A1- 2006 147 308

## Description

### Field of invention

The present invention relates to a method and to an arrangement for installing at least one rotor blade at a hub of a wind turbine.

### Art Background

For installing a wind turbine installation of one or more rotor blades to a rotation shaft of the wind turbine is required. The rotor blade may be installed at a particular angular position or orientation of the wind turbine blades, such that the rotor blades may for example be oriented horizontally or vertically aligned with their longitudinal axis. When the rotor blades are installed having a particular orientation (such as horizontally or vertically oriented with respect to their longitudinal axis) the hub of the wind turbine has to be turned or rotated for installation of each of the plural rotor blades, such as by 120° when three rotor blades are used in the wind turbine. This may be especially difficult, when a gearless direct drive wind turbine is installed. In this case, it may take a large torque to rotate the hub.

US 2006/0147308 A1 discloses a method for mounting rotor blades for a wind turbine, wherein the rotor hub is rotated into a predetermined first position, a rotor blade is fitted, the rotor hub is rotated by means of the rotor blade into a predetermined second position and a second rotor blade is mounted, wherein the rotation of the rotor hub is effected in the direction of the effect of gravitational force of the first rotor blade which is already mounted. Thereby, the rotor blades have at least one through hole which enables safe and secure handling of the rotor blade upon mounting thereof to a rotor hub.

Document DE 102009013876A discloses another method for installing rotor blades at a hub of a wind turbine.

There may be a need for a method and an arrangement for installing at least one rotor blade at a hub of a wind turbine, wherein modification of the rotor blade may not be required and wherein the method supports the installation of plural rotor blades, such as three rotor blades. Further, there may be a need for a simplified installation method.

### Summary of the Invention

This need may be met by the subject matter according to the independent claims. Advantageous embodiments of the present invention are described by the dependent claims.

According to an embodiment of the present invention it is provided a method for installing at least one rotor blade at a hub of a wind turbine, the method comprising: attaching a lever having a first portion and a second portion at the hub by connecting the first portion to the hub, wherein in particular the first portion is selectively rotatably lockable and rotatably unlockable from the second portion; rotatably locking the first portion and the second portion; applying a force at the second portion of the lever, to rotate the hub into an angular position; connecting the rotor blade at the hub rotated into the angular position.

Installing the rotor blade may comprise lifting (from a ground or a transport vehicle) the rotor blade (i.e. by a crane) upwards such that a connection portion of the rotor blade may be vertically aligned with the hub. Thereby, the hub may be connected on top of a wind turbine tower. Further, installing the rotor blade may comprise to orient the longitudinal axis of the rotor blade (defined by a direction of maximal extent of the rotor blade) into a particular orientation, such as a horizontal orientation or a vertical orientation or any orientation between a horizontal orientation and a vertical orientation. For example the orientation may be characterized by an angle of 30° or 60° or 90° between the longitudinal axis of the rotor blade and the vertical axis (pointing to or away from the center of the earth).

Thereby, the rotor blade may be lifted using a clamp or a number of clamps which may be clamped to the rotor blade and which may have one or more wires connected to the crane.

Further, the method may comprise attaching the lever at the hub which may also be achieved by using a crane and lifting the lever to a vertical position corresponding to the vertical position of the hub. Thereby, in particular, the lever may be lifted using the crane by connecting one or more wires to the first portion and/or to the second portion. Once the lever is attached to the hub, all rotor blades which need to the installed at this wind turbine can be installed without detaching the lever. In particular, the lever may stay attached during installation of all rotor blades which need to be installed at the wind turbine. Thereby, the method may be simplified.

The first portion may be much smaller than the second portion and may comprise a connection element for connecting the first portion to the hub. In particular, the first portion may be screwed onto the hub using one or more screws. In particular, existing holes in the hub may be used for connecting the first portion to the hub.

The lever is adapted such that the first portion is selectively rotatably lockable and rotatably unlockable from the second portion. When the first portion is rotatably locked with the second portion, turning the second portion or moving the second portion also turns or moves the first portion, since the first portion and the second portion are fixedly connected relative to each other, such that in particular a force (or torque) applied to the second portion is transferred to the first portion. Thereby, rotating the hub is enabled by applying a force to the second portion which is transferred to the first portion which in turn transfers the force or the torque to the hub. Thereby, a simple manner is achieved for turning the hub to orient the hub into the angular position or another angular position or still a further angular position.

The rotatably locking the first portion and the second portion may be performed before or after attaching the lever at the hub.

In particular, the force may be applied in an upward vertical direction by using a crane generating the upward force. Alternatively or additionally the force may be applied in a downward vertical direction, such as by a gravitational force or a winch which may be located at a ground beside which the wind turbine tower may be installed.

The force may also be a force counteracting a gravitational force such as to keep an already installed rotor blade at a controllable or fixed position, wherein the counterforce may in particular be just equal to the gravitational force but may allow to slowly lower the already installed rotor blade, such as to be in a vertical position, wherein its longitudinal axis is oriented vertically.

The connecting the rotor blade at the hub may comprise screwing the rotor blade using one or more screws to the hub at predefined connection sites.

In particular, a wire of a crane may be attached to the second portion of the lever. In particular, the attached wire may be maintained attached during the whole installation procedure. Thereby, the method may be simplified without requiring to connecting a wire to this particular rotor blade which is currently being installed and detaching the wire after installing this rotor blade. Further, the rotor blade do not need to be modified in order to provide an opportunity to attach a wire during the installation process. Thereby, the aerodynamical properties of the rotor blades may not be compromised.

According to an embodiment of the present invention the method further comprises rotatably unlocking the first portion and the second portion; rotating the second portion relative to the first portion and relative to the hub (without turning the hub); rotatably locking the first portion and the second portion; applying another force at the second portion of the lever, to rotate the hub into another angular position; connecting another rotor blade at the hub rotated into the other angular position.

Rotatably unlocking the first portion and the second portion enables to rotate the second portion relative to the first portion without rotating the hub. Thereby, the lever may be brought in a position or orientation which allows to apply a force or torque via the lever in a selective direction, when the first portion and the second portion are rotatably locked after having oriented the lever appropriately. Thereby, different angular positions of the hub may be effected or adjusted, such that the hub in particular may be rotated into the other angular position which is appropriate to mount the other rotor blade.

In particular, during orientation of all rotor blades they may be orientated such that their longitudinal axes are oriented horizontally. By unlocking the first portion and the second portion, rotating the second portion relative to the first portion, locking the first portion and the second portion and applying a force or another force at the second portion it may enabled to turn the hub into the angular position, into the other angular position and also into a further angular position, wherein the angular position, the other angular position and the further angular position are respective angular positions suited for mounting the rotor blade, the other rotor blade and the further rotor blade to the hub.

Further, plural other angular positions may be set using the lever to install even more rotor blades to the hub.

According to an embodiment of the present invention the method further comprises, in particular after locking the hub relative a nacelle, connecting a further rotor blade at the hub rotated into a further angular position; rotatably locking the first portion and the second portion; applying a further force at the second portion of the lever, to rotate the hub into an intermediate angular position (at which no rotor blade is mounted to the hub); rotatably unlocking the first portion and the second portion; rotating the second portion relative to the first portion and relative to the hub.

In particular, these additional method steps may be performed at the beginning of an installation procedure for installing a number of rotor blades, such as three rotor blades, to the hub. In particular, as a very first step, the hub may be locked relative to the nacelle, in order to avoid rotation of the hub when the further rotor blade is connected to the hub and when the gravitational weight of the further rotor blade tends to generate a torque which would turn the hub, if the hub would not be locked relative to the nacelle.

In particular, the lever may be attached to the hub at the very beginning of the installation procedure, such that a longitudinal axis of a bar of the lever is oriented at an angle of 45° (in particular pointing with its second portion transversely upwards) relative to the vertical direction. In particular, in this orientation the lever is suitably arranged to counteract a gravitational weight of the further rotor blade when the further rotor blade is lowered from a horizontal orientation to a vertical orientation by turning the hub about 90°. Thereby, in particular, the further force may be just as high as (or only slightly lower than) the gravitational force generated by the further rotor blade connected to the hub or may be slightly lower such as to enable slowly lowering the further rotor blade or turning it such as to reach the vertical orientation of its longitudinal axis. At this orientation the bar may be oriented having its longitudinal axis including an angle of 135° with the vertical direction wherein the force application region of the second portion may be vertically arranged lower than the first portion (such that the second portion transversely points downwards). In contrast, at the very beginning of the installation procedure the force application region of the second portion may be vertically arranged higher than the first portion of the lever.

In particular, the second portion may be rotated about 90° relative to the first portion, in the situation, when the first portion is unlocked from the second portion. Thereby, the lever may be arranged in a suitable position in order to apply an upwards force at the second portion of the lever to rotate the hub into the angular position at which then the rotor blade is connected at the hub.

According to an embodiment of the present invention the hub is rotating in a direction of the applied force or in a direction opposite to the applied force. In particular, the applied force may be directed vertically upwards and the hub may rotate in the direction corresponding to the upward directed force. Alternatively, the hub may rotate in the other direction, when the applied force counteracts a gravitational force of one or more rotor blades already installed at the hub.

According to an embodiment of the present invention a longitudinal axis of the blade, the other blade and/or the further blade is horizontally arranged when connecting the blade, the other blade and/or the further blade to the hub.

The longitudinal axis of the blade may be a direction on an axis along a maximal extent of the blade. Thereby a conventional orientation of installing rotor blades may be applied. In particular, a clamp may be used to lift the rotor blade (being in a horizontal orientation) from the ground towards the hub without requiring to change the orientation of the blade. Thereby, the method may be simplified.

It should be understood that features individually or in any combination disclosed, described and mentioned or applied for a method for installing at least one rotor blade at a hub of a wind turbine may also be applied to or used for or provided for (individually or in any combination) an arrangement for installing at least one rotor blade at a hub of a wind turbine according to an embodiment of the present invention and vice versa.

According to an embodiment of the present invention it is provided an arrangement for installing at least one rotor blade at a hub of a wind turbine, the arrangement comprising: a lever having a first portion and a second portion, wherein the first portion is connectable to the hub, wherein the first portion is selectively rotatably lockable and rotatably unlockable from the second portion; and a connecting member for connecting the first portion of the lever to the hub, wherein the second portion of the lever is adapted for applying a force at the lever, to rotate the hub into an angular position.

The connecting member may comprise one or more screws.

The arrangement may further comprise a crane for applying a upwards directed force and/or a winch which may be located on the ground at the base of the wind turbine tower.

The second portion may comprise a bar and a force application region, the bar separating the first portion from the force application region, in particular by a distance between 1 m and 20 m, further in particular between 2 m and 10 m.

The bar may extend to an amount between 1 m and 20 m in a direction of maximal extent of the bar. The force application region may for example comprise a hole or an eyelet or hook or a connector for connecting a wire of a crane or of a winch. The longer the bar is the higher the torque may be which is generatable (at the first portion) by the lever by applying a force at the second portion. Thereby, a torque generated by the already installed rotor blades may be counteracted either to hold the already installed wind turbine rotor blades in position or allow to turn or rotate the hub in a controlled fashion.

According to an embodiment of the present invention the force application region comprises a wire attachment site for attaching a wire, in particular of a crane and/or a winch adapted to generate a force in a vertical direction upwards and/or downwards.

Thereby, conventionally available instruments or machines may be used for performing the method.

According to an embodiment of the present invention the first portion comprises a first contact region, wherein the second portion comprises a second contact region, wherein the first contact region is in contact with the second contact region.

The first contact region may for example comprise a circular contact surface and also the second contact region may comprise a circular contact surface or rollers or balls of a roller bearing or a ball bearing. Lubricant may be present between the first contact region and the second contact region for reducing friction.

According to an embodiment of the present invention the first contact region and the second contact region together form a pivot bearing. In particular, a ball bearing or a roller bearing may be formed by the first contact region and the second contact region. Thereby, turning the first portion relative to the second portion may be simplified by reducing friction between the first contact region and the second contact region.

According to an embodiment of the present invention the arrangement further comprises a locking member, in particular at least one pin, for rotatably locking the first portion and the second portion relative to each other. In particular, the first portion and the second portion may be adapted such that one or more members (in particular pins) of the first and/or the second portion engage with one or more recesses (or holes) of the first portion and/or the second portion for rotatably locking the first portion and the second portion.

According to an embodiment of the present invention the first portion and the second portion are rotatably lockable relative to each other in a plurality of discrete angular positions.

Alternatively, the first portion and the second portion may be rotatably lockable relative to each other in a plurality of continuous angular positions such that any arbitrary angular position may be adjusted characterizing the relative orientation of the first portion and the second portion.

According to an embodiment of the present invention the arrangement further comprises a locking/unlocking mechanism including a hydraulic/electric actuator for rotatably locking/unlocking the first portion and the second portion. The locking/unlocking mechanism may be driven by electricity or electric energy and/or by a hydraulic fluid, such as oil, wherein a compressor or a pump may be used.

According to an embodiment of the present invention the arrangement further comprises a remote control to control, in particular wire-based and/or wireless, an operation of the locking/unlocking mechanism. Thereby, the locking/unlocking mechanism may for example be controlled from inside the nacelle or from inside of a operator's cap of the crane or the winch. Thereby, the method may be simplified.

Embodiments of the present invention are now described with reference to the accompanying drawings. The invention is not limited to the described or illustrated embodiments.

### Brief Description of the Drawings

- Fig. 1: schematically illustrates an overview of an installation process for installing rotor blades to a wind turbine according to an embodiment of the present invention;
- Fig. 2: schematically illustrates a lever used in a method and an arrangement for installing a rotor blade at a hub of a wind turbine according to an embodiment of the present invention; and
- Figs. 3-17: schematically illustrate steps during a method for installing a rotor blade according to an embodiment of the present invention.

### Detailed Description

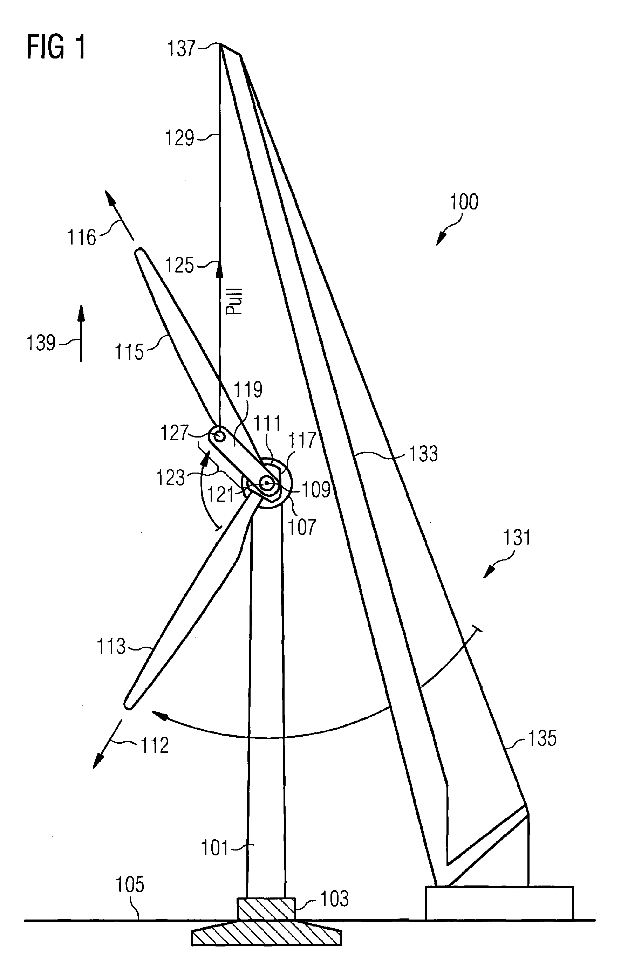

Fig. 1 illustrates an overview 100 of a method for installing a rotor blade at a hub of a wind turbine according to an embodiment of the present invention.

A wind turbine tower 101 is installed at a foundation 103 at the ground 105 at an installation site on the earth. On top of the wind turbine tower 101 a nacelle 107 is mounted in which a rotation shaft is rotatably mounted which can rotate around a rotation axis 109.

The rotation shaft (not illustrated in Fig. 1) comprises at a front portion a hub 111 at which three rotor blades are connectable from which only two rotor blades 113, 115 are illustrated, whereas a third rotor blade is to be connected to a connection site 117 of the hub 111.

For connecting the rotor blades 113, 115 as well as the third not yet illustrated rotor blade a lever 119 is attached to the hub 111, wherein a first portion 121 of the lever 119 is connected to the hub 111 by not illustrated screws. At a second portion 123 which is rotatably lockable/unlockable relative to the first portion 121 of the lever 119 a force 125 is applicable at a force application region 127 which here comprises a hole for connecting a wire 129 of a crane 131 having a crane boom 133 which is supported by a wire or a chain 135. Thereby, a top 137 of the crane 131 is vertically (along the direction 139) located above the position of the hub 111, such that the crane 131 is enabled to apply the upward directed force 125 to the force application region 127 of the lever 123, in order to turn the hub 111 to particular angular positions.

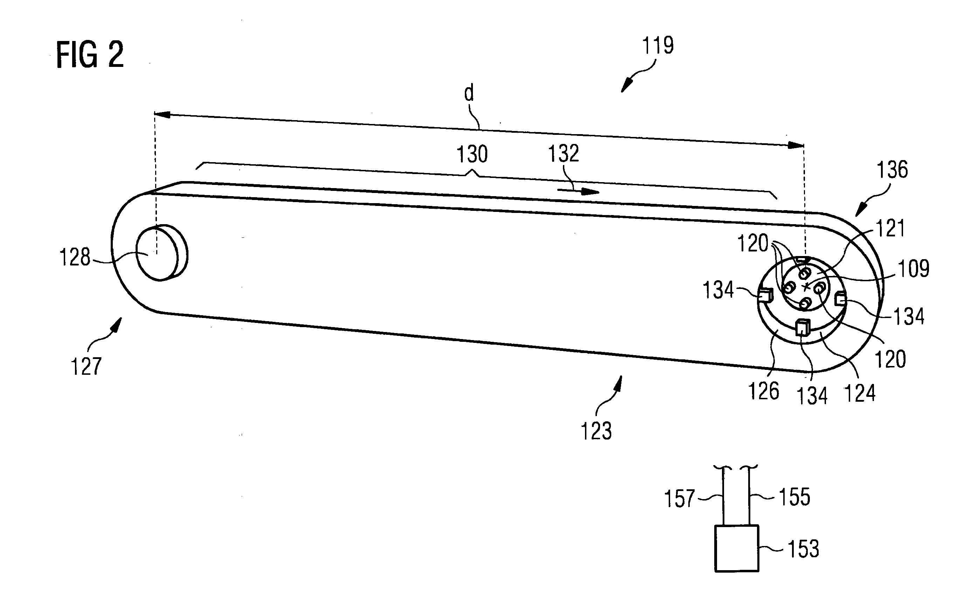

Fig. 2 schematically illustrates the lever 119 in a perspective view. The lever 119 comprises the first portion 121 which may be connected fixedly to the hub 111 using screws 120. In particular, the first portion 121 comprises a circular disc which comprises a first contact region 124 which is in contact with a second contact region 126 of the second portion 123 which is rotatable relative to the first portion 121 when in an unlocked state.

In particular, the second portion 123 of the lever 119 comprises the force application region 127 which in the illustrated embodiment comprises a wire attachment site 128 for engaging with a hook or with a wire of a crane, such as the wire 129 of the crane 131 illustrated in Fig. 1.

The second portion 123 further comprises a bar 130 which has a extent along its longitudinal direction 132 such that the wire attachment site 128 is spaced apart from the first portion 121 of the lever 119 by a distance d which may amount to between 1 m and 20 m, for example.

For unlocking/locking the first portion 123 relative to the first portion 121 the lever 119 comprises a locking/unlocking mechanism 136 which comprises at least one pin 134. The locking mechanism 128, in particular the pin 134 is operable by a not illustrated actuator, such as a hydrolic or electric motor. Thereby, the locking/unlocking mechanism 136 may be controlled by a controller 153 providing control signals 155, 157 wire-based or wirelessly.

Upon operating the locking/unlocking mechanism 136 the first portion 121 and the second portion 123 of the lever 119 can be selectively locked or unlocked rotatably (around rotation axis 109) relative to each other. When in the unlocked state the second portion 123 is enabled to rotate along or around the rotation axis 109 relative to the first portion 121 without simultaneous rotating the first portion 121.

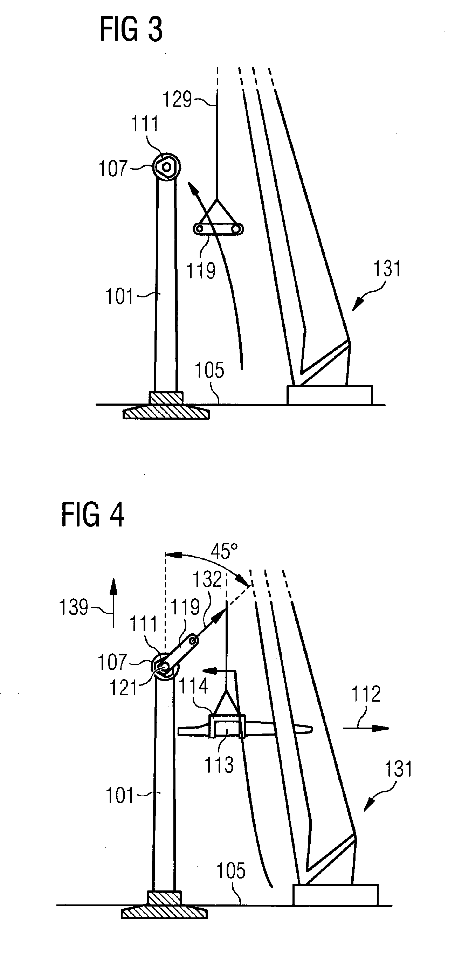

Thereby, different relative orientations of the first portion 121 relative to the second portion 123 may be adjusted which may be used during a method for installing a rotor blade or a number of rotor blades to a hub of a wind turbine according to an embodiment of the present invention, as is illustrated in Figs. 3 to 17.

Fig. 3 schematically illustrates the situation, wherein the wind turbine tower 101, the nacelle 107 and the hub 111 have already been assembled, but the rotor blades are still missing. In a first step the lever 119 is lifted using the crane 131 from the ground 105 towards the hub 111.

As it is illustrated in Fig. 4 the lever 119 is connected via the first portion 121 (using not illustrated screws) to the hub 111 such that its longitudinal axis 132 includes an angle of 45° with the vertical direction 139 pointing upwards. Thereby, the first portion 121 and the second portion 123 are rotatably locked relative to each other.

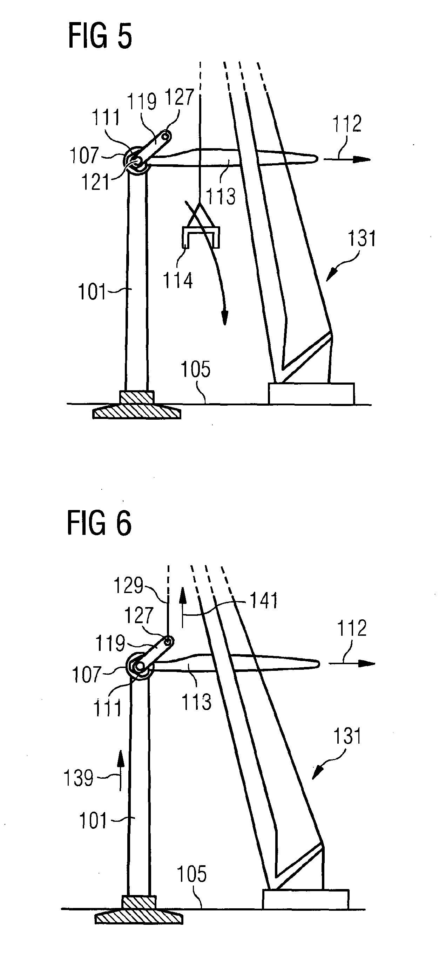

Then, a further rotor blade 113 is lifted using a clamp 114 which is drawn upwards by the crane 131 and is connected to the hub 111 which is rotated into a further angular position, as is illustrated in Fig. 5. Thereupon, the clamp 114 is removed from the further rotor blade 113, after having locked the hub 111 relative to the nacelle 111, for example using a low-speed block provided by the gear box or by the nacelle.

In a next step, as is illustrated in Fig. 6, the wire 129 is connected to the wire attachment site 128 at the second portion of the lever 119 and the crane applies, via the cable or wire 139 an upward force, in particular a further force 141, to the second portion 123 of the lever 119, in particular to counteract a gravitational force of the further rotor blade 113 which acts when the hub is unlocked relative to the nacelle.

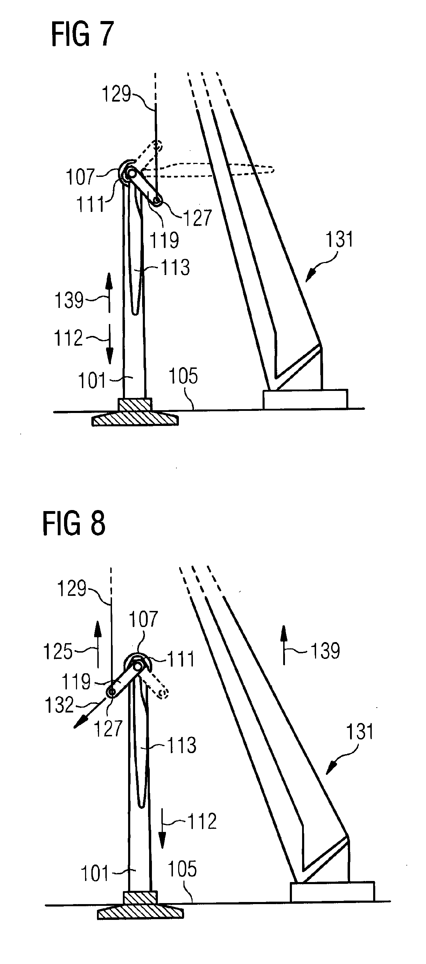

As is further illustrated in Fig. 7, the first portion 121 and the second portion 123 are now locked relative to each other and the crane 131 slowly lowers the wire 139 in order to turn the hub 111 relative to the nacelle 107 by 90° such that the longitudinal axis 112 of the further rotor blade 113 is directed opposite to the vertical direction 139.

In this situation, as is illustrated in Fig. 8, the first portion and the second portion 123 are rotatably unlocked and the second portion 123 is rotated (from the orientation shown in Fig. 7 to that in Fig. 8) relative to the first portion (and thus also relative to the hub 111) to reach an orientation of the lever 119 where the longitudinal axis 132 includes an angle of 110° to 135° with the vertical direction 139.

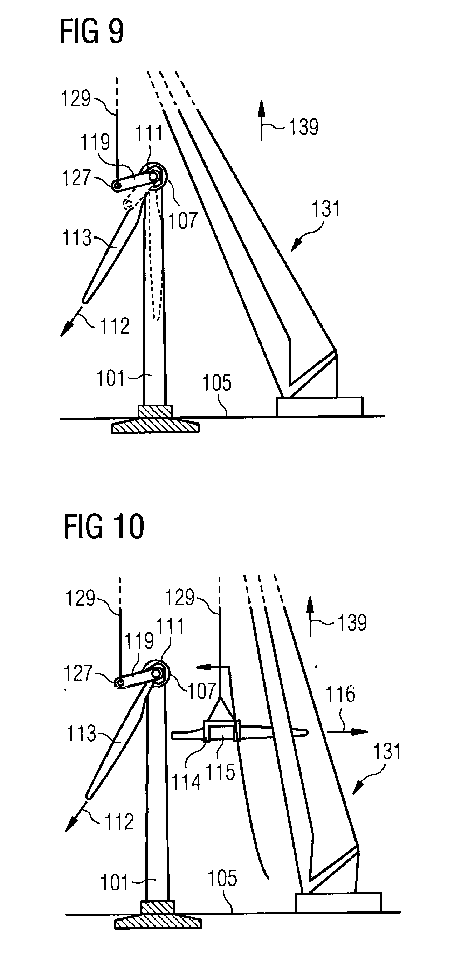

In this orientation of the lever 119 the first portion and the second portion are rotatably locked, as is illustrated in Fig. 9 and the crane 131 pulls via the wire 139 at the second portion to rotate the hub by 30°, in order to reach an angular position of the hub 111.

As is further illustrated in Fig. 10, at this angular position of the hub 111 a rotor blade 115 is lifted (via another crane or the same crane) using another clamp 114. After having lifted the rotor blade 115 to the vertical position of the hub 111, the rotor blade 115 is connected to the hub 111.

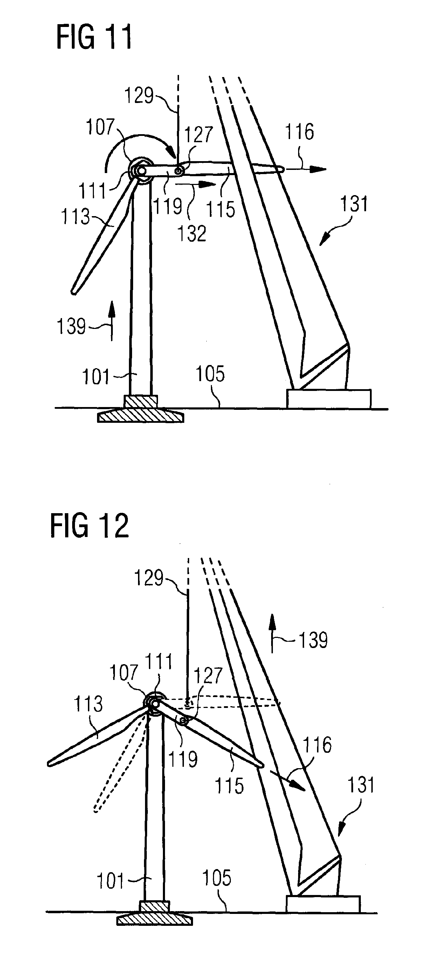

As is further illustrated in Fig. 11, after having connected the rotor blade 115 to the hub 111, the first portion 121 is unlocked relative to the second portion 123 of the lever 119 and the second portion of the lever is turned clockwise by an angle of about 105° to be aligned with the longitudinal axis 116 of the rotor blade 115. Thus, the longitudinal axis 132 of the lever 119 and the longitudinal axis 116 of the rotor blade 115 are coincident.

Then, the first portion and the second portion of the lever 119 are rotatably locked relative to each other. As is illustrated in Fig. 12 the rotor blade or the hub 111 is turned further in a clockwise direction such that the already mounted rotor blades 113, 115 are balanced, as is illustrated in Fig. 12.

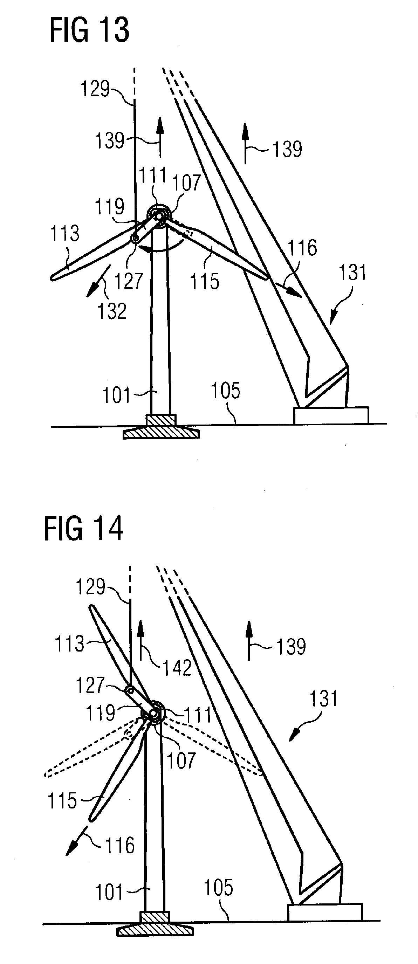

In this step the first portion and the second portion are rotatably unlocked and the second portion is rotated relative to the first portion in a clockwise direction by 90° such that the longitudinal axis 132 of the lever 119 and the vertical direction 139 include an angle of 225°, as illustrated in Fig. 13.

At this method step the first portion 121 and the second portion 123 (locked to each other) are rotated by application of another force 142 to the second portion 123 of the lever 119. Thereby, also the hub is rotated by 90° in order to reach another angular position of the hub 111 (Fig. 14).

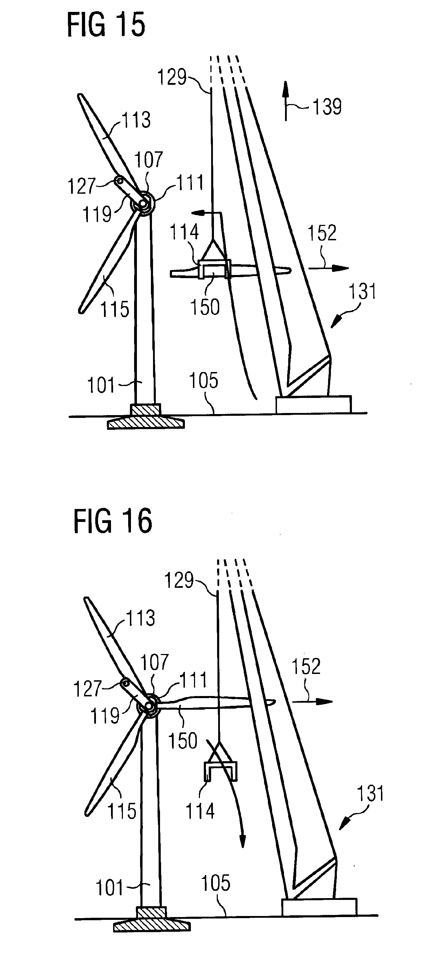

At this other angular position of the hub 111 another rotor blade 150 is lifted (in a horizontal orientation having its longitudinal axis 118 oriented horizontally) towards the hub 111 and is connected to the hub arranged at the other angular position, as is illustrated in Figs. 15, 16. After that, the clamp 114 is removed from the other rotor blade 150.

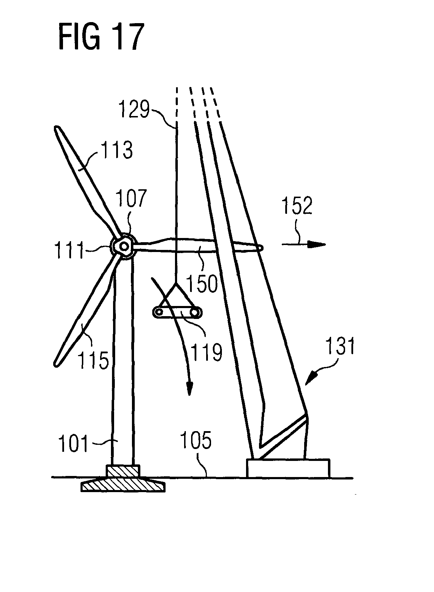

As a last step of installing the three rotor blades 113, 115 and 116 to the hub 111 the lever 117 is detached from the hub 111, as illustrated in Fig. 17.

Using the lever a crane arm may be attached, via a wire, to the hub of the wind turbine, to rotate the hub during blade installation. Thereby, installation of the blades are enabled without modifying the blades and without using additional methods like adding dummy weights to the hub. Thereby, turning or rotating the hub may be performed in a very stable and secure manner. Thereby, in particular the weight of the lever may be quite lower than any kind of dummy weight, as the lever only needs to have a certain length d and a certain stiffness to transfer a necessary torque to the hub of the wind turbine.

In particular, the lever may be detachable attached to the front part of the hub 111 of the wind turbine. The wire attachment site 128 may comprise an attachment element for attaching this portion to a crane or another lifting apparatus. At the other end of the lever (first portion) there may be a rotatably point having one or more locking pins for unlocking or locking the lever in relation to the hub of the wind turbine. When in an unlocked state the relative positions or orientations of the first portion and the second portion can be freely adjusted. When in a locked state the orientation or relative orientation of the first portion and the second portion is fixed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for installing at least one rotor blade (113, 115, 116) at a hub of a wind turbine, the method comprising:
attaching a lever (119) having a first portion (121) and a second portion (123) at the hub (111) by connecting the first portion (121) to the hub (111);
rotatably locking the first portion (121) and the second portion (123);
applying a force (125) at the second portion (123) of the lever (119), to rotate the hub (111) into an angular position;
connecting the rotor blade (115) at the hub rotated into the angular position.

2. Method according to claim 1, further comprising:
rotatably unlocking the first portion and the second portion;
rotating the second portion relative to the first portion and relative to the hub;
rotatably locking the first portion and the second portion;
applying another force (142) at the second portion of the lever, to rotate the hub into another angular position;
connecting another rotor blade (150) at the hub (111) rotated into the other angular position.

3. Method according to claim 1 or 2, further comprising
connecting a further rotor blade (113) at the hub rotated into a further angular position;
rotatably locking the first portion and the second portion;
applying a further force (141) at the second portion of the lever, to rotate the hub into an intermediate angular position;
rotatably unlocking the first portion and the second portion;
rotating the second portion relative to the first portion and relative to the hub;

4. Method according to one of the preceding claims,
wherein the hub rotates in a direction of the applied force or in a direction opposite of the applied force.

5. Method according to one of the preceding claims,
wherein a longitudinal axis (112, 116, 152) of the blade (113, 115, 150), the other blade and/or the further blade is horizontally arranged when connecting the blade, the other blade and/or the further blade to the hub.

6. Arrangement for installing at least one rotor blade at a hub of a wind turbine, the arrangement comprising:
a lever (119) having a first portion (121) and a second portion (123), wherein the first portion (121) is connectable to the hub (111), wherein the first portion (121) is selectively rotatably lockable and rotatably unlockable relative to the second portion (123); and
a connecting member (120) for connecting the first portion of the lever to the hub,
wherein the second portion (123) of the lever is adapted for applying a force (125) at the lever (119), to rotate the hub (111) into an angular position.

7. Arrangement according to claim 6,
wherein the second portion (123) comprises a bar (130) and a force application region (127), the bar (130) separating the first portion (121) from the force application region (127), in particular by a distance (d) between 1 m and 20 m, further in particular between 2 m and 10 m.

8. Arrangement according to claim 7,
wherein the force application region comprises a wire attachment site (127) for attaching a wire (129), in particular of a crane (131) and/or a winch adapted to generate a force (125) in a vertical direction (139) upwards and/or downwards.

9. Arrangement according to one of claims 6 to 8,
wherein the first portion (121) comprises a first contact region (124),
wherein the second portion (123) comprises a second contact region (126), wherein the first contact region is in contact with the second contact region.

10. Arrangement according to claim 9, wherein the first contact region and the second contact region form a pivot bearing.

11. Arrangement according to one of claims 6 to 10, further comprising a locking member, in particular at least one pin (134), for rotatably locking the first portion (121) and the second portion (123).

12. Arrangement according to one of claims 6 to 11, wherein the first portion and the second portion are rotatably lockable relative to each other in a plurality of discrete angular positions.

13. Arrangement according to one of claims 6 to 12, further comprising
a locking/unlocking mechanism (159) including a hydraulic/electric actuator for rotatalby locking/unlocking the first portion and the second portion.

14. Arrangement according to claim 13, further comprising:
a remote control (153) to control, in particular wire based (155, 157) and/or wireless, an operation of the locking/unlocking mechanism.

## Patentansprüche

1. Verfahren zum Montieren mindestens eines Rotorblatts (113, 115, 116) an einer Nabe einer Windenergieanlage, welches Folgendes umfasst:
Anbringen eines Hebels (119) mit einem ersten Abschnitt (121) und einem zweiten Abschnitt (123) an der Nabe (111) durch Anfügen des ersten Abschnitts (121) an die Nabe (111),
Drehverriegeln des ersten Abschnitts (121) mit dem zweiten Abschnitt (123),
Anwenden einer Kraft (125) an dem zweiten Abschnitt (123) des Hebels (119) zum Drehen der Nabe (111) in eine Winkelposition,
Anfügen des Rotorblatts (115) an die in die Winkelposition gedrehte Nabe.

2. Verfahren nach Anspruch 1, das ferner Folgendes umfasst:
Drehentriegeln des ersten von dem zweiten Abschnitt,
Drehen des zweiten Abschnitts in Bezug zu dem ersten Abschnitt und der Nabe,
Drehverriegeln des ersten mit dem zweiten Abschnitt,
Anwenden einer anderen Kraft (142) an dem zweiten Abschnitt des Hebels zum Drehen der Nabe in eine andere Winkelposition,
Anfügen eines weiteren Rotorblatts (150) an die in die andere Winkelposition gedrehte Nabe (111).

3. Verfahren nach Anspruch 1 oder 2, das ferner Folgendes umfasst:
Anfügen eines weiteren Rotorblatts (113) an die in eine weitere Winkelposition gedrehte Nabe,
Drehverriegeln des ersten mit dem zweiten Abschnitt,
Anwenden einer weiteren Kraft (141) an dem zweiten Abschnitt des Hebels zum Drehen der Nabe in eine Zwischenwinkelposition,
Drehentriegeln des ersten von dem zweiten Abschnitt,
Drehen des zweiten Abschnitts in Bezug zu dem ersten Abschnitt und der Nabe.

4. Verfahren nach einem der vorhergehenden Ansprüche, bei dem sich die Nabe in eine Richtung der angewendeten Kraft oder in eine der angewendeten Kraft entgegengesetzte Richtung dreht.

5. Verfahren nach einem der vorhergehenden Ansprüche, bei dem eine Längsachse (112, 116, 152) des Blatts (113, 115, 150), des anderen Blatts und/ oder des weiteren Blatts horizontal angeordnet ist, wenn das Blatt, das andere Blatt und/ oder das weitere Blatt an die Nabe angefügt wird.

6. Anordnung zum Montieren mindestens eines Rotorblatts an einer Nabe einer Windenergieanlage, wobei die Anordnung Folgendes umfasst:
einen Hebel (119) mit einem ersten Abschnitt (121) und einem zweiten Abschnitt (123), wobei sich der erste Abschnitt (121) an die Nabe (111) anfügen lässt, wobei sich der erste Abschnitt (121) mit dem zweiten Abschnitt (123) gezielt drehverriegeln und drehentriegeln lässt,
ein Anfügeelement (120) zum Anfügen des ersten Abschnitts des Hebels an die Nabe,
wobei der zweite Abschnitt (123) des Hebels für das Anwenden einer Kraft (125) an dem Hebel (119) zum Drehen der Nabe (111) in eine Winkelposition ausgelegt ist.

7. Anordnung nach Anspruch 6,
wobei der zweite Abschnitt (123) einen Stab (130) und einen Kraftanwendungsbereich (127) umfasst, wobei der Stab (130) den ersten Abschnitt (121) insbesondere um einen Abstand (d) zwischen 1 m und 20 m, ferner insbesondere zwischen 2 m und 10 m von dem Kraftanwendungsbereich (127) trennt.

8. Anordnung nach Anspruch 7,
bei der der Kraftanwendungsbereich eine Drahtanbringstelle (127) zum Anbringen eines Drahtes (129), insbesondere eines Krans (131) und/ oder einer Winde, umfasst, der bzw. die so ausgelegt ist, dass er bzw. sie in vertikaler Richtung (139) nach oben und/ oder unten eine Kraft (125) erzeugt.

9. Anordnung nach einem der Ansprüche 6 bis 8,
bei der der erste Abschnitt (121) einen ersten Kontaktbereich (124) umfasst,
bei der der zweite Abschnitt (123) einen zweiten Kontaktbereich (126) umfasst, wobei der erste Kontaktbereich den zweiten Kontaktbereich berührt.

10. Anordnung nach Anspruch 9, bei der der erste Kontaktbereich und der zweite Kontaktbereich ein Zapfenlager bilden.

11. Anordnung nach einem der Ansprüche 6 bis 10, die ferner ein Verriegelungselement, insbesondere mindestens einen Stift (134), zum Drehverriegeln des ersten Abschnitts (121) mit dem zweiten Abschnitt (123) umfasst.

12. Anordnung nach einem der Ansprüche 6 bis 11, bei der sich der erste und der zweite Abschnitt in mehreren diskreten Winkelpositionen miteinander drehverriegeln lassen.

13. Anordnung nach einem der Ansprüche 6 bis 12, die ferner Folgendes umfasst:
einen Verriegelungs-/ Entriegelungsmechanismus (159) mit einem hydraulischen/ elektrischen Stellglied zum Drehverriegeln/ Drehentriegeln des ersten mit/ von dem zweiten Abschnitt.

14. Anordnung nach Anspruch 13, die ferner Folgendes umfasst:
eine Fernsteuereinrichtung (153) zum insbesondere drahtgebundenen (155, 157) und/ oder drahtlosen Steuern eines Betriebs des Verriegelungs-/ Entriegelungsmechanismus.

## Revendications

1. Procédé destiné à installer au moins une pale de rotor (113, 115, 116) sur un moyeu d'une éolienne, le procédé consistant à :
- fixer un levier (119) présentant une première partie (121) et une seconde partie (123) sur le moyeu (111) en reliant la première partie (121) au moyeu (111) ;
- bloquer en rotation la première partie (121) et la seconde partie (123) ;
- appliquer une force (125) sur la seconde partie (123) du levier (119), afin de faire tourner le moyeu (111) dans une position angulaire ;
- relier la pale de rotor (115) sur le moyeu tourné dans la position angulaire.

2. Procédé selon la revendication 1, consistant en outre à :
- débloquer en rotation la première partie et la seconde partie ;
- faire tourner la seconde partie par rapport à la première partie et par rapport au moyeu ;
- bloquer en rotation la première partie et la seconde partie ;
- appliquer une autre force (142) sur la seconde partie du levier, afin de faire tourner le moyeu dans une autre position angulaire ;
- relier une autre pale de rotor (150) sur le moyeu (111) tourné dans l'autre position angulaire.

3. Procédé selon la revendication 1 ou 2, consistant en outre à :
- relier encore une autre pale de rotor (113) sur le moyeu tourné dans encore une autre position angulaire ;
- bloquer en rotation la première partie et la seconde partie ;
- appliquer encore une autre force (141) sur la seconde partie du levier, afin de faire tourner le moyeu dans une position angulaire intermédiaire ;
- débloquer en rotation la première partie et la seconde partie ;
- faire tourner la seconde partie par rapport à la première partie et par rapport au moyeu.

4. Procédé selon l'une des revendications précédentes,
dans lequel le moyeu tourne dans une direction de la force appliquée ou dans une direction opposée à la force appliquée.

5. Procédé selon l'une des revendications précédentes,
dans lequel un axe longitudinal (112, 116, 152) de la pale (113, 115, 150), l'autre pale et/ou encore une autre pale est agencé horizontalement lors de la liaison de la pale, l'autre pale et/ou encore une autre pale au moyeu.

6. Agencement destiné à installer au moins une pale de rotor sur un moyeu d'une éolienne, l'agencement comprenant :
- un levier (119) présentant une première partie (121) et une seconde partie (123), la première partie (121) pouvant être reliée au moyeu (111), la première partie (121) pouvant être sélectivement bloquée en rotation et débloquée en rotation par rapport à la seconde partie (123) ; et
- un élément de liaison (120) destiné à relier la première partie du levier au moyeu,
dans lequel la seconde partie (123) du levier est adaptée pour appliquer une force (125) sur le levier (119), afin de faire tourner le moyeu (111) dans une position angulaire.

7. Agencement selon la revendication 6,
dans lequel la seconde partie (123) comprend une barre (130) et une zone d'application de force (127), la barre (130) séparant la première partie (121) de la zone d'application de force (127), en particulier à une distance (d) comprise entre 1 m et 20 m, plus particulièrement entre 2 m et 10 m.

8. Agencement selon la revendication 7,
dans lequel la zone d'application de force comprend un site de fixation de câble (127) pour fixer un câble (129), en particulier d'une grue (131) et/ou d'un treuil adapté pour générer une force (125) dans une direction verticale (139) vers le haut et/ou vers le bas.

9. Agencement selon l'une des revendications 6 à 8,
dans lequel la première partie (121) comprend une première zone de contact (124),
dans lequel la seconde partie (123) comprend une seconde zone de contact (126),
la première zone de contact étant en contact avec la seconde zone de contact.

10. Agencement selon la revendication 9, dans lequel la première zone de contact et la seconde zone de contact forment une crapaudine.

11. Agencement selon l'une des revendications 6 à 10, comprenant en outre un élément de blocage, en particulier au moins une goupille (134), pour bloquer en rotation la première partie (121) et la seconde partie (123).

12. Agencement selon l'une des revendications 6 à 11, dans lequel la première partie et la seconde partie peuvent être bloquées en rotation l'une par rapport à l'autre dans une pluralité de positions angulaires discrètes.

13. Agencement selon l'une des revendications 6 à 12, comprenant en outre :
- un mécanisme de blocage/déblocage (159) comprenant un actionneur hydraulique/électrique pour bloquer/débloquer en rotation la première partie et la seconde partie.

14. Agencement selon la revendication 13, comprenant en outre : une commande à distance (153) afin de commander, en particulier sur une base filaire (155, 157) et/ou sans fil, un fonctionnement du mécanisme de blocage/déblocage.
